# EUROPEAN PATENT APPLICATION

(11) **EP 4 340 137 A1**
(43) Date of publication of application: **20.03.2024**
(21) Application number: 23812195.8
(22) Date of filing: 26.05.2023
(51) Int. Cl.: H01R 13/527, H01R 13/03, H01R 13/04, H01R 43/18

(54) **HIGHLY HEAT-RESISTANT BATTERY PACK CONNECTOR AND MANUFACTURING METHOD THEREFOR**

(30) Priority: 26.05.2022 KR 20220064990
(71) Applicant: LG Energy Solution, Ltd., Seoul 07335 (KR)
(72) Inventor: LEE, Chang Hun, Daejeon 34122 (KR)
(74) Representative: Goddar, Heinz J.
(86) International application number: PCT/KR2023/007258
(87) International publication number: WO 2023/229421

(57) **Abstract**

The present invention relates to a connector for battery packs, the connector including a terminal pin configured to serve as an electrical connection path, a lower end portion to which the terminal pin is mounted, a main body portion in which the lower end portion is disposed, and a housing including the lower end portion and the main body portion, wherein the terminal pin is mounted to the lower end portion in the state in which an assembly portion comprising a highly moldable material is added to a part of an outer surface of the terminal pin, and the housing includes a high heat resistant material, whereby melting of the connector for battery packs is prevented, and therefore it is possible to prevent spread of thermal runaway occurring in a battery pack to the outside.

## Description

### [Technical Field]

This application claims the benefit of priority to Korean Patent Application No. 2022-0064990 filed on May 26, 2022, the disclosure of which is incorporated herein by reference in its entirety.

The present invention relates to a high heat resistant connector for battery packs and a method of manufacturing the same. More particularly, the present invention relates to a high heat resistant connector for battery packs configured such that heat resistance of the connector is improved, whereby safety of the connector is increased and thermal runaway is prevented even at high temperatures, and a method of manufacturing the same.

### [Background Art]

A lithium secondary battery has a problem in that, when fire breaks out, it is difficult to extinguish the fire until the lithium secondary battery is completely combusted. When thermal runaway occurs due to abnormality of a battery cell, a connector adjacent to an electrode lead is exposed to flames first.

Secondary damage may be caused due to breakage of the connector by flames or heat. A plurality of battery cells may be grouped so as to be used as a battery module or battery pack, and the connector is often a connector for battery packs connected to the plurality of battery cells. A conventional connector for battery packs is made of a low heat resistant material, which may easily melt, whereby flames caused by thermal runaway may spread throughout the battery pack and may rapidly propagate outside the battery pack.

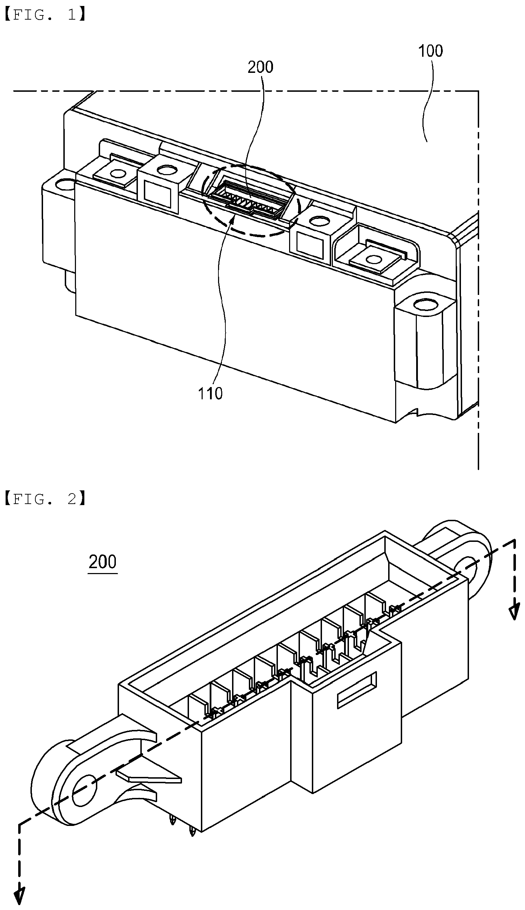

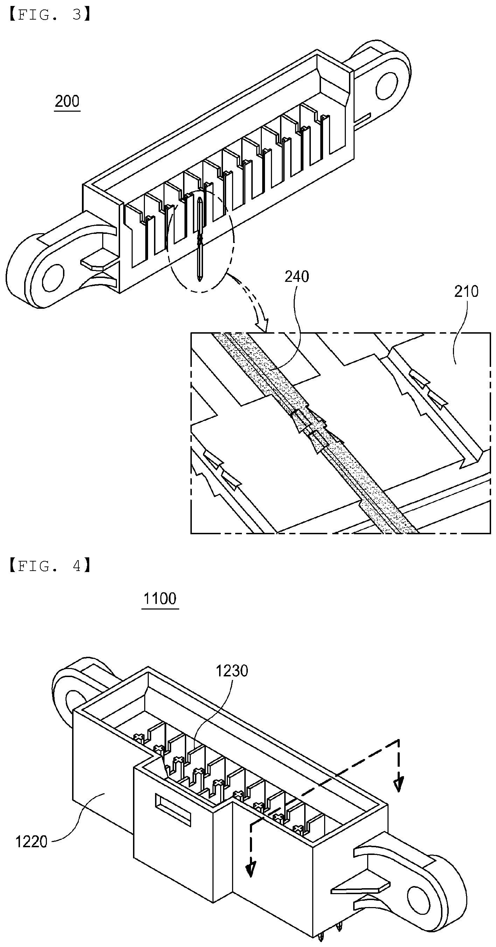

FIG. 1 is a perspective view of a conventional battery pack connection portion including a connector for battery packs, FIG. 2 is a perspective view showing only the connector for battery packs of FIG. 1, and FIG. 3 is a sectional view taken along a dotted line of FIG. 2 and a partial enlarged view.

Referring to FIGs. 1 to 3, the conventional connector 110 for battery packs is located at one end of a battery pack 100.

Since a lower end of the connector 110 for battery packs is electrically connected to an electrode terminal, the temperature of the connector for battery packs abruptly increases when fire breaks out. Since a housing 200 of the conventional connector for battery packs is made of plastic, the housing 200 of the connector for battery packs may be easily melted when the temperature of the batter pack increases.

Furthermore, a lower end portion 210 to which a terminal pin 240 is coupled requires high precision in molding due to the shape of the terminal pin 240, and therefore the lower end portion must be manufactured using injection molding using plastic.

If the housing 200 of the connector 110 for battery packs is made of plastic having a low melting point, a melted portion may be deformed or removed, whereby an opening may be easily formed in the battery pack. Flames and sparks may erupt through the opening formed in the battery pack. As a result, thermal runaway may spread to another battery pack, which seriously reduces safety of the entire system including the battery pack.

A variety of research studies have been conducted in order to solve the above problem.

Patent Document 1 relates to a battery module, wherein the battery module includes a connector exposed from the battery module so as to be electrically connected to an external device, and the connector includes a metal connector housing.

In Patent Document 1, static electricity introduced into the connector for battery packs flows out to a ground pin connection portion and a ground pin via the metal housing outside the connector, and the static electricity that has flown to the ground pin is grounded through an external ground line. That is, Patent Document 1 is technology to solve a problem due to static electricity.

Patent Document 1 does not suggest a method of solving a problem with a connector for battery packs damaged when a thermal runaway phenomenon occurs.

Patent Document 2 relates to a connector for printed circuit boards including a contact terminal having a contact pin in contact with another connector at one end thereof and a terminal portion in contact with a printed circuit board at the other end thereof, a housing in which the contact terminal is installed, and a hood configured to cover the contact pin of the contact terminal.

Patent Document 2 discloses technology to easily assemble and repair the connector and to easily attach the connector to the printed circuit board, but does not suggest any configuration to improve heat resistance of the connector.

Even though the conventional connector for battery packs may be melted and become a great problem when thermal runaway occurs due to overheating, as described above, technology capable of recognizing or solving such a problem has not yet been proposed.

### (Prior Art Documents)

(Patent Document 1) Korean Patent Application Publication No. 2018-0090572 (2018.08.13)
(Patent Document 2) Korean Registered Patent Publication No. 1136682 (2012.04.06)

### [Disclosure]

### [Technical Problem]

The present invention has been made in view of the above problems, and it is an object of the present invention to provide a high heat resistant connector for battery packs configured such that, when the temperature of a battery pack increases or flames occur in the battery pack, melting of the connector, which is vulnerable to the flames, is prevented and the spread of thermal runaway is inhibited, and a method of manufacturing the same.

### [Technical Solution]

A connector for battery packs according to the present invention to accomplish the above object includes a terminal pin configured to serve as an electrical connection path, a lower end portion to which the terminal pin is mounted, a main body portion in which the lower end portion is disposed, and a housing including the lower end portion and the main body portion, wherein the terminal pin is mounted to the lower end portion in the state in which an assembly portion including a highly moldable material is added to a part of an outer surface of the terminal pin, and the housing includes a high heat resistant material.

The highly moldable material may be a thermoplastic resin configured to be used in injection molding.

The highly moldable material may be an insulating material.

The high heat resistant material may be a ceramic or a metal.

The high heat resistant material may be a material having a melting point of 1,000°C or higher.

The lower end portion may have a plurality of through-holes, to each of which the terminal pin is coupled, and the outer shape of the assembly portion added to the outer surface of the terminal pin may be formed so as to conform to the inner shape of each of the plurality of through-holes.

The terminal pin and the assembly portion may be integrated so as to have a one-piece structure.

A partition portion configured to prevent deformation of the terminal pin during coupling of an external terminal may be formed above the lower end portion, and the partition portion may include a high heat resistant material.

The present invention provides a method of manufacturing the connector, the method including preparing a housing having a plurality of through-holes formed in a lower end portion of the housing such that terminal pins are coupled to the housing, placing terminal pins in a mold and adding an injection material to form an assembly portion, and coupling the terminal pins, to each of which an assembly portion formed as the result of solidifying the injection material is added, to the through-holes.

The housing may include a high heat resistant material.

The assembly portion may enclose the terminal pin therein.

In addition, the present invention provides a method of manufacturing the connector, the method including preparing a housing having a plurality of through-holes formed in a lower end portion of the housing such that terminal pins are coupled to the housing, forming an assembly portion in each of the through-holes of the housing using injection molding, and coupling each of the terminal pins to a corresponding one of the assembly portions.

The housing may be made of a high heat resistant material.

The terminal pin may be coupled to the assembly portion using press fitting.

In addition, the present invention may provide various combinations of the above constructions.

### [Advantageous Effects]

As is apparent from the above description, a connector for battery packs according to the present invention is configured such that a lower end portion of a housing includes a high heat resistant material except for an assembly portion added to a terminal pin, whereby it is possible to prevent melting of the connector for battery packs even in a high temperature environment.

Since the remainder of the housing other than the terminal pin and the assembly portion includes a high heat resistant material, as described above, the shape of the housing of the connector for battery packs may be maintained in a high temperature environment, and even though thermal runaway occurs in a battery pack, it is possible to prevent the spread of thermal runaway out of the battery pack, and therefore it is possible to provide a battery pack with improved safety.

In addition, since the assembly portion, which includes a highly moldable material, is added to the terminal pin, which is difficult to mold, it is possible to stably mount the terminal pin.

It is possible for the high heat resistant connector for battery packs according to the present invention to maintain a high-precision outer shape like a conventional connector for battery packs.

### [Description of Drawings]

FIG. 1 is a perspective view of a conventional battery pack connection portion including a connector for battery packs.
FIG. 2 is a perspective view showing only the connector for battery packs of FIG. 1.
FIG. 3 is a sectional view taken along a dotted line of FIG. 2 and a partial enlarged view.
FIG. 4 is a perspective view of a connector for battery packs according to the present invention.
FIG. 5 is a sectional view in the state in which a terminal pin and an assembly portion are omitted from FIG. 4.
FIG. 6 is a sectional view in the state in which the terminal pin and the assembly portion are added to FIG. 5.
FIG. 7 is a lower perspective view before the terminal pin is inserted in FIG. 4.

### [Best Mode]

Now, preferred embodiments of the present invention will be described in detail with reference to the accompanying drawings such that the preferred embodiments of the present invention can be easily implemented by a person having ordinary skill in the art to which the present invention pertains. In describing the principle of operation of the preferred embodiments of the present invention in detail, however, a detailed description of known functions and configurations incorporated herein will be omitted when the same may obscure the subject matter of the present invention.

In addition, the same reference numbers will be used throughout the drawings to refer to parts that perform similar functions or operations. In the case in which one part is said to be connected to another part throughout the specification, not only may the one part be directly connected to the other part, but also, the one part may be indirectly connected to the other part via a further part. In addition, that a certain element is included does not mean that other elements are excluded, but means that such elements may be further included unless mentioned otherwise.

In addition, a description to embody elements through limitation or addition may be applied to all inventions, unless particularly restricted, and does not limit a specific invention.

Also, in the description of the invention and the claims of the present application, singular forms are intended to include plural forms unless mentioned otherwise.

Also, in the description of the invention and the claims of the present application, "or" includes "and" unless mentioned otherwise. Therefore, "including A or B" means three cases, namely, the case including A, the case including B, and the case including A and B.

Hereinafter, embodiments of the present invention will be described in detail with reference to the drawings.

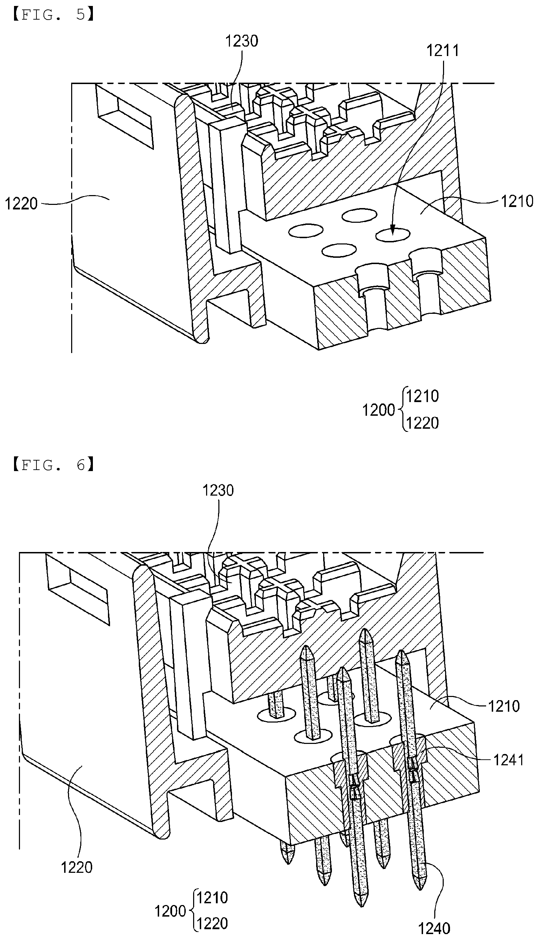

FIG. 4 is a perspective view of a connector for battery packs according to the present invention, FIG. 5 is a sectional view in the state in which a terminal pin and an assembly portion are omitted from FIG. 4, and FIG. 6 is a sectional view in the state in which the terminal pin and the assembly portion are added to FIG. 5.

Referring to FIGs. 4 to 6, the connector 1100 for battery packs according to the present invention includes a terminal pin 1240 serving as an electrical connection path, a lower end portion 1210 to which the terminal pin 1240 is mounted, a main body portion 1220 in which the lower end portion 1210 is disposed, and a housing 1200 including the lower end portion 1210 and the main body portion 1220, wherein the terminal pin 1240 is mounted to the lower end portion 1210 in the state in which an assembly portion 1241 including a highly moldable material is added to a part of an outer surface of the terminal pin, and the housing 1200 includes a high heat resistant material.

That is, the connector 1100 for battery packs according to the present invention includes the terminal pin 1240 and the assembly portion 1241 mounted to the housing 1200, but the housing 1200, which includes a high heat resistant material, is referred to herein as excluding the terminal pin 1240 and the assembly portion 1241.

The connector 1100 for battery packs according to the present invention may be mounted to one end of a battery pack 100, as in the battery pack 100 shown in FIG. 1, and is electrically connected to a terminal of a battery module in the battery pack.

The connector for battery packs according to the present invention may be a low voltage connector, and the low voltage connector may be used to drive a battery management system or an electric component or to sense voltage and temperature of battery cells.

When any one of the battery cells in the battery pack ignites while the battery pack is used, the connector for battery packs, which is adjacent to an electrode lead, is exposed to flames first.

When thermal runaway of the battery cell occurs, the surface temperature of the battery pack reaches 600°C or higher, and the temperature of the connector for battery packs abutting the battery pack also increases rapidly. In order to prevent deformation of the connector for battery packs and thus to prevent the flames from erupting out of the battery pack, the connector for battery packs is preferably made of a material having a high melting point.

In the present invention, the housing of the connector for battery packs includes a high heat resistant material, and therefore the housing may not easily melt and the shape of the housing may be stably maintained even though the temperature of the battery pack to which the connector for battery packs is mounted is high.

Since the terminal pin 1240 mounted to the lower end portion 1210 is elongated and has a fine curved surface on an outer surface thereof, however, the assembly portion 1241 added to the terminal pin 1240 is difficult to mold and requires high precision at the time of manufacture. Consequently, the assembly portion 1241 may include a plastic material having a lower melting point than the high heat-resistant material constituting the housing, and may be manufactured by an injection molding method using a highly moldable material with excellent moldability.

In a concrete example, when an insert injection molding method of pre-loading the terminal pin 1240 into a mold and adding an injection material to form the assembly portion 1241 is used, the terminal pin 1240 and the assembly portion 1241 may be integrated so as to have a one-piece structure.

The highly moldable material may be a thermoplastic resin usable for injection molding, and specifically, the thermoplastic resin may be at least one selected from the group consisting of polyethylene (PE), polypropylene (PP), polystyrene (PS), an acrylonitrile/butadiene/styrene (ABS) resin, polymethylmethacrylate (PMMA), polycarbonate (PC), polyoxymethylene (POM), polyamide (PA), polyphenylene oxide (PPO), polyphenylene ether (PPE), polyphenylene sulfide (PPS), polyethylene terephthalate (PET), and polyvinyl chloride (PVC).

The highly moldable material may be an insulating material added to the outer surface of the terminal pin 1240 in order to block electrical conductivity between the terminal pin 1240 and the lower end portion 1210 of the housing.

The insulating material is not particularly restricted in type, but any one of the above highly moldable materials may be used in consideration of the fact that the assembly portion is manufactured using injection molding.

It is preferable for the high heat resistant material to be a material that does not melt and retains the shape thereof even at a high temperature of 1,000°C or higher. For example, the high heat resistant material may include a ceramic and/or a metal, wherein the metal may be stainless steel having a melting point of 1,000°C or higher. In addition, at least one of glass fiber reinforced plastic (GFRP), which is a recently developed high heat resistant material, an engineered material based on mica, and a ceramic based on minerals may be used.

The high heat resistant material may be solidified by adding a potting solution, or may be manufactured by direct machining using a lathe or a milling machine.

Referring to FIGs. 5 and 6, the lower end portion 1210 is provided with a plurality of through-holes 1211, to each of which the terminal pin 1240 is coupled, and the outer shape of the assembly portion 1241 added to the outer surface of the terminal pin 1240 may be formed so as to correspond to the inner shape of each of the plurality of through-holes 1211. As a result, the assembly portion 1241 may be stably mounted in each of the through-holes 1211 in tight contact therewith.

A partition portion 1230, to which an external terminal is coupled, is formed above the lower end portion 1210, the partition portion 1230 being configured to prevent deformation of the terminal pin 1240 when the external terminal is coupled, and the partition portion 1230 includes the same high heat resistant material as the lower end portion 1210 and the main body portion 1220.

Since the lower end portion, the main body portion, and the partition portion of the housing include a high heat resistant material, as described above, the shape of the housing may be stably maintained even when the temperature of the battery pack increases.

A method of manufacturing the connector for battery packs may include a step of preparing a housing having a plurality of through-holes formed in a lower end portion thereof such that terminal pins are coupled thereto, a step of placing terminal pins in a mold and adding an injection material for forming an assembly portion, and a step of coupling the terminal pins, to each of which an assembly portion formed as the result of solidifying the injection material is added, to the through-holes.

That is, a terminal pin as an insert is placed in a mold, and the mold is filled with an injection material to add the injection material to the insert, and the injection material is cooled and solidified for a predetermined period of time. As a result, an insert injection molded article in which an assembly portion formed of the injection material and the terminal pin are integrated is manufactured, wherein the assembly portion is configured to completely enclose the terminal pin. The terminal pin thus manufactured may be mounted to each of the through holes 1211 formed in the lower end portion 1210 of the housing by insertion, as shown in FIG. 5, so as to have a shape shown in FIG. 6.

The housing includes a high heat resistant material, wherein a potting solution made of a high heat resistant material may be added to the mold and then the potting solution may be solidified, whereby the housing shown in FIG. 5 may be manufactured. Alternatively, the parts may be subdivided and manufactured by direct machining using a lathe or a milling machine.

Another method of manufacturing the connector for battery packs may include a step of preparing a housing having a plurality of through-holes formed in a lower end portion thereof such that terminal pins are coupled thereto, a step of forming an assembly portion in each of the through-holes of the housing using injection molding, and a step of coupling each of the terminal pins to a corresponding one of the assembly portions.

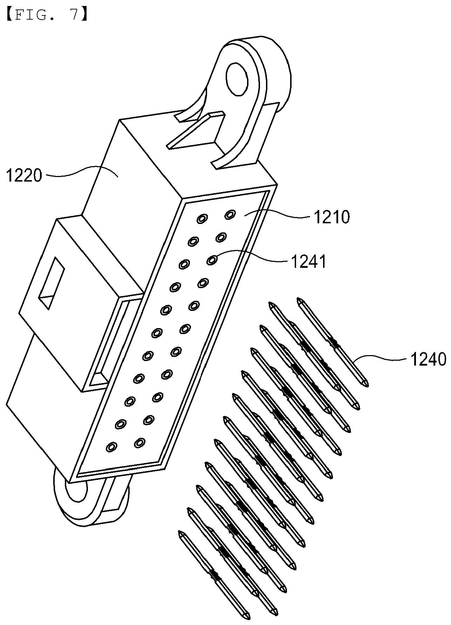

FIG. 7 is a lower perspective view before the terminal pin is inserted in FIG. 4.

Referring to FIG. 7, the assembly portions 1241 are added to the through-holes formed in the lower end portion 1210 of the main body portion 1220 of the housing, and the terminal pins 1240 are not coupled thereto.

That is, the connector for battery packs may be manufactured using a method of adding an injection material to each of the through-holes in the lower end portion 1210 of the housing to form an assembly portion 1241, and coupling each of the terminal pins 1240 to the assembly portion 1241, instead of performing insert injection molding for the terminal pins.

Alternatively, an injection material may be added to the mold to separately form an assembly portion 1241, the assembly portion 1241 may be inserted into each of the through-holes formed in the lower end portion 1210 of the housing, and each of the terminal pins 1240 may be coupled to the assembly portion 1241.

As a method of coupling the terminal pin to the assembly portion, the terminal pin may be coupled to the assembly portion using press fitting.

In the connector for battery packs according to the present invention, the housing includes a high heat resistant material except for the terminal pins and the assembly portions, whereby it is possible to prevent damage to the connector for battery packs even through explosion or ignition occurs in the battery pack.

Those skilled in the art to which the present invention pertains will appreciate that various applications and modifications are possible within the category of the present invention based on the above description.

### (Description of Reference Numerals)

100: Battery pack
110, 1100: Connectors for battery packs
200, 1200: Housings
210, 1210: Lower end portions
1211: Through-hole
1220: Main body portion
1230: Partition portion
240, 1240: Terminal pins
1241: Assembly portion

## Claims

1. A connector for battery packs, the connector comprising:
a terminal pin configured to serve as an electrical connection path;
a lower end portion to which the terminal pin is mounted;
a main body portion in which the lower end portion is disposed; and
a housing comprising the lower end portion and the main body portion, wherein
the terminal pin is mounted to the lower end portion in a state in which an assembly portion comprising a highly moldable material is added to a part of an outer surface of the terminal pin, and
the housing comprises a high heat resistant material.

2. The connector according to claim 1, wherein the highly moldable material is a thermoplastic resin configured to be used in injection molding.

3. The connector according to claim 1, wherein the highly moldable material is an insulating material.

4. The connector according to claim 1, wherein the high heat resistant material is a ceramic or a metal.

5. The connector according to claim 1, wherein the high heat resistant material comprises a material having a melting point of 1,000°C or higher.

6. The connector according to claim 1, wherein the lower end portion has a plurality of through-holes, to each of which the terminal pin is coupled, and an outer shape of the assembly portion added to the outer surface of the terminal pin is formed so as to conforms to an inner shape of each of the plurality of through-holes.

7. The connector according to claim 1, wherein the terminal pin and the assembly portion are integrated so as to have a one-piece structure.

8. The connector according to claim 1, wherein a partition portion configured to prevent deformation of the terminal pin during coupling of an external terminal is formed above the lower end portion, and the partition portion comprises a high heat resistant material.

9. A method of manufacturing the connector according to any one of claims 1 to 8, the method comprising:
preparing a housing having a plurality of through-holes formed in a lower end portion of the housing such that terminal pins are coupled to the housing;
placing terminal pins in a mold and adding an injection material to form an assembly portion; and
coupling the terminal pins, to each of which an assembly portion formed as a result of solidifying the injection material is added, to the plurality of through-holes.

10. The method according to claim 9, wherein the housing comprises a high heat resistant material.

11. The method according to claim 9, wherein the assembly portion encloses the terminal pin therein.

12. A method of manufacturing the connector according to any one of claims 1 to 8, the method comprising:
preparing a housing having a plurality of through-holes formed in a lower end portion of the housing such that terminal pins are coupled to the housing;
forming an assembly portion in each of the through-holes of the housing using injection molding; and
coupling each of the terminal pins to a corresponding one of the assembly portions.

13. The method according to claim 12, wherein the housing comprises a high heat resistant material.

14. The method according to claim 12, wherein the terminal pin is coupled to the assembly portion using press fitting.
